# EUROPEAN PATENT APPLICATION

(11) **EP 4 789 749 A1**
(43) Date of publication of application: **12.08.2026**
(21) Application number: 25156304.5
(22) Date of filing: 06.02.2025
(51) Int. Cl.: B01D 46/24

(54) **FLUID FILTER CARTRIDGE WITH HOUSING GASKET**

(71) Applicant: Hengst SE, 48147 Münster (DE)
(72) Inventor: ARDES, Wilhelm, 59387 Ascheberg (DE)
(74) Representative: Lohr, Jöstingmeier & Partner Patent- und Rechtsanwälte mbB

(57) **Abstract**

An end cap 100 for a fluid filter cartridge 10 with a connector portion 120, a gasket 140 and a longitudinal axis, wherein the gasket 140 surrounds the connector portion 120 provides for a reliable and fluid tight connection between a housing cover and a housing socket of a filter housing, if the sleeve 160 surrounds the gasket 140 and provides a radial abutment 164 for the gasket 140.

## Description

### Field of the invention

The invention relates to an end cap of a fluid filter cartridge for being installed in a fluid filter housing, wherein the filter housing may have a housing socket and/or a housing cover.

The end cap may comprise a connector portion and a gasket. The connector portion may define an axis. The connector portion may be configured for being connected with a first side facing into a first axial direction with a socket and hence provide a connector or may be configured to be received by a filter housing cover. The connector portion may support the gasket, and the gasket may surround the connector portion. The gasket may have a first surface facing at least essentially in the first axial direction and a second surface facing at least essentially in a second axial direction, wherein the second axial direction is at least essentially opposite to the first axial direction. The gasket may have a peripheral surface and a connector portion facing surface, which may as well be referred to as axis facing surface. The non-compressed gasket may have an axial dimension *d_{nc}.*

### Description of the related art

EP 3 341 103 A1 discloses a fluid filter cartridge with a front-end cap, a rear-end cap and filter element in between of these. The filter element encircles a fluid channel being connected via a through hole in the front-end cap with a housing socket. A housing cover holds the fluid filter cartridge in place. Fluid to be filtered enters the socket and flows via a first duct in the socket to a gap between the housing cover and the filter element. From there, the fluid flows through the filter element into the first fluid channel. The filtered fluid can be withdrawn from the fluid channel via the through hole and a second duct in the socket. The fluid filter cartridge has a gasket that is axially compressed between the socket and the filter housing, which is advantageous, as the gasket is replaced each time the filter cartridge is replaced. Replacement of the gasket cannot be forgotten and does not require additional time or logistics. In some applications, fluid leakage can been observed between the housing cover and the gasket, even if the housing cover is firmly closed.

### Summary of the invention

The problem to be solved by the invention is to provide a fluid filter cartridge with a housing gasket that reduces leakage problems of fluid filter systems.

Solutions to the problem are described in the independent claim. The dependent claims relate to further improvements of the invention.

In an example, the invention is or at least comprises an end cap for a fluid filter cartridge. The corresponding fluid filter cartridge (as well referred to as filter cartridge or cartridge, for short) may be configured for being removably inserted into a fluid filter housing (filter housing or housing, for short) with a housing cover (cover, for short) and a housing socket (socket, for short). The fluid filter cartridge may comprise the end cap as will be explained below in more detail.

The end cap may comprise a connector portion that may define an axis. The connector portion may comprise a body. The body may be an at least essentially flat body. The body may be cylindric and hence a be cylindric body, i.e., the body may be a (preferably right) cylinder or at least resemble a (preferably right) cylinder. In this example, the axis is preferably parallel to the generating lines of the cylinder and extends preferably through its center. The body may have a through hole, and may thus be a hollow cylinder. It is noted that the through hole may be centered on the axis, but does not need to. Herein, it is instructive to assume that the body is or resembles flat right cylinder, however this is not required.

The through hole may be a part of a connector and/or may enable a fluid communication of a connector at a first side of the connector portion with a fluid channel on a second side of the connector portion. Herein, it is assumed that the first side faces at least essentially in a first axial direction (as well: first direction) and that the second side faces at least essentially in the opposite direction, being referred to herein as second direction or second axial direction. In other words, the second direction *̅d̅*̅₂ is preferably at least essentially opposed to the first direction *̅d̅*̅₁, i.e. $\frac{{\vec{d}}_{1}}{\left|{\vec{d}}_{1}\right|} = - \frac{{\vec{d}}_{2}}{\left|{\vec{d}}_{2}\right|}$. The first side and the second side may be connected by a peripheral surface of the connector portion. The two sides are respective surfaces of the connector portion, and the term "side" has only been used to linguistically distinguish these sides from first and second surfaces of a gasket which will be explained below in detail.

The end cap may further comprise a gasket. The gasket may preferably be configured to be clamped between a housing socket and a housing cover of a fluid filter housing, wherein the housing socket and the housing cover are configured to enclose a volume configured to receive a filter element attached to the first side or the second side of the connector portion. Preferably, the housing socket and the housing cover are configured to enclose a volume configured to receive a filter cartridge comprising the end cap.

The gasket may be located, e.g., on at least a portion of the peripheral surface of the connector portion. In other words, the gasket may form a ring surrounding the connector portion, e.g. the body of the connector portion. The gasket may thus comprise an antiradially facing surface being located on at least a portion of the peripheral surface of the connector portion.

Thus, the axis may as well be defined by the gasket. If the axis is defined by the gasket, it may be assumed that the axis is perpendicular to the plane in which a first sealing surface is located and that the axis is centered in a through hole defined by the gasket. Generally, in most practical applications the two alternatives of determining the axis should lead to the same result. Herein, the first sealing surface is the surface that is configured to sealingly contact a socket, i.e. the first sealing surface faces in the first direction and is herein as well referred to as the first surface of the gasket. The second surface of the gasket may preferably face at least essentially in the opposite direction, i.e. at least essentially in the second direction.

As apparent, the body may be or at least resemble a cylinder, but even if this is a preferred example, it may but does not need to be a circular cylinder. The cylinder's closed directing curve may have any shape. For example, the closed directing curve of the cylinder can be circular, polygonal, oval, or be any combination of corresponding sections.

The cylinder may be a flat cylinder, wherein herein a flat cylinder is a cylinder with a length of the closed directing curve being at least 5 times, preferably 10 times larger than the length of the generating line being translated along the directing curve to obtain the cylinder. The body having at least essentially the shape of a cylinder may have protrusions, recesses and through holes as required, e.g. to match an interface being defined by the socket and/or the housing cover. For a definition of cylinder, see Bronshtein, Semedyayev, Musiol Muehlig: Handbook of Mathematics, 5th edition, Springer Berlin Heidelberg New York, ISBN 978-3-540-72121-5: Chapter 3.3.4, page154ff), only for illustrative purposes it may be assumed that the connector portion comprises a flat right circular cylinder with at least one through hole. The two sides do not even need to be plane, but herein it may be assumed that they are. The plane sides may have protrusions or recesses.

The connector portion is preferably configured to provide a fluid communication between a fluid channel, e.g., of a filter element at the second side of the connector portion to a mating second connector of a fluid filter housing socket (herein as well *socket* or *housing socket,* for short).

The first side or the second side may be configured for being attached to a filter element. The filter element may form said fluid channel, which may be in fluid communication with the connector. The portion of the first side or second side configured for being attached to a filter element may essentially be plane and the axis of the connector portion is preferably at least essentially perpendicular to the plane portion. The two sides are respective surfaces of the connector portion and the term "side" has only been used to linguistically distinguish these sides from first and second surfaces of a gasket.

As already explained, a first side of the connector portion may be configured for being attached to the socket and/or the second side of the disk may be configured to or even be attached to a first end of a filter element. In this case, the end cap may be considered as the front end cap for (or of) a fluid filter cartridge, wherein the front end is the end being configured for being attached to a filter housing socket. In another example, the first side of the connector portion may be configured to be attached or be attached to a filter element and the second side may be configured to be received and/or covered by a filter housing cover. In this example the end cap may be considered as the rear end cap for (or of) a fluid filter cartridge.

Hence when mounted, in both examples, the first side is configured to face or faces towards the socket and the second side faces is configured to face towards the filter housing cover.

The gasket may be attached to and/or be supported by the connector portion. The gasket may surround the connector portion, preferably the peripheral surface of the connector portion. The gasket may have a first axially facing surface (first surface, for short) facing at least essentially in the first axial direction and a second axially facing surface (second surface, for short) facing at least essentially in the second axial direction (second direction, for short). The gasket may further have a connector portion facing side, which faces at least essentially towards the axis (and is thus an at least essentially antiradially facing surface) and a peripheral surface. As usual the peripheral surface may be considered to face at least essentially in the radial direction.

The first surface may be configured to or sealingly contacting the socket and/or the second surface may be configured for sealingly contacting the housing cover. Thus after installation, the gasket may be located (preferably directly) between the housing cover and the socket and may be axially compressed by a force pushing the housing cover and the socket against each other. In other words, the housing cover may be biased towards the socket, i.e. in the first direction, thereby clamping the gasket in between of the housing cover and the socket. In a non-compressed state, the axially measured dimension of the gasket is *d_{nc}* and in a compressed state the axially measured dimension of the gasket is *d_{c}* (preferably *d_{c} < d_{nc}*)*.* The axially compressed gasket may have a greater circumference than the non-compressed gasket.

In a particularly preferred example, a sleeve surrounds the gasket and has an inner surface facing preferably at least essentially antiradially towards the gasket.

At least a portion of the inner surface may provide a radial abutment for the gasket, at least in a compressed state of the gasket. In other words, the sleeve has a gasket facing surface (the inner surface of the sleeve) that may surround the gasket. The inner surface of the sleeve may preferably be configured to limit or even inhibit a radial extension of the gasket when the gasket is axially compressed. Preferably, the non-compressed gasket is already in contact with the sleeve, but this is not required. In other words, the gasket facing surface, i.e. the radial abutment is preferably configured to limit an elastic extension of the gasket in the radial direction. The elastic extension of the gasket's peripheral surface (i.e. of the sleeve facing surface) towards the sleeve's radial abutment surface may be, e.g., due to an axial compression of the gasket as explained above when clamping the gasket between a housing cover and a housing socket. It comes without saying that, *limiting a radial extension* in this context means that even if the uncompressed gasket is not in contact with sleeve's radial abutment, it is in the compressed state. In practice it may be assumed that axially compressing a gasket, depending on the material may cause a radial extension of, e.g., a few percent. Hence the gap between the gasket and the radial abutment of the sleeve is preferably smaller or equal to these few percent of the radial extension of the gasket, e.g. smaller 1%, 2%, 3%, 4%, 5%, 7.5% and/or smaller 10%. For non-circular symmetric gaskets the mean of the gap as a function of the azimuth may be considered.

Summarizing, the sleeve may radially support the gasket and thereby prevent the gasket from being so to speak extruded and/or squeezed by the fluid pressure and the force compressing the gasket between the socket and the housing cover. In case there is a gap between the sleeve and the uncompressed gasket, the sleeve may be configured to radially support the gasket, e.g. by designing the gap as explained above.

The invention is based on the observation that pressure oscillations in the fluid system, i.e. in the filter housing cause an axial oscillation of the housing cover, i.e. the compression of the gasket is not constant and these oscillations cause the gasket of prior art filter cartridges to be squeezed into a gap between the housing cover and the socket, which then causes fluid to leak out of the housing. This fluid leakage can be avoided by radially supporting the gasket with the sleeve of the cartridge instead by the housing cover, as the sleeve may remain in its position even if the housing cover oscillates axially.

Only for completeness, it is noted that the sleeve may preferably have a peripheral surface. The sleeve's peripheral surface may face at least essentially in the opposite direction as the radial abutment (i.e. as the gasket facing surface). In an example, the peripheral surface and the radial abutment may be connected by the first boundary and the second boundary.

The sleeve may be limited in the first direction by a front surface facing at least essentially in the first direction. Only to linguistically distinguish this front surface from the first surface of the gasket, the front surface limiting the sleeve in the first direction is referred to as *first boundary.* Similarly, the sleeve may be limited in the second direction by another (rearward) surface facing at least essentially in the second direction. Again, only to linguistically distinguish this rearward surface, it is herein referred to as *second boundary.*

In a preferred example, the first boundary of the sleeve is at least essentially axially aligned with the first surface of the gasket. Particularly preferred, the first boundary of the sleeve is at least essentially flush with the first surface or the second boundary of the sleeve is at least essentially flush with the second surface. These measures as well contribute to a reliable sealing contact as it can be avoided that the sleeve and the gasket have to be reposited relative to each other when installing the end cap in a filter housing. Such repositioning may damage the gasket and hence cause fluid leaks. Only to avoid misunderstandings, at "least essentially aligned", as usual indicates that the first boundary of the sleeve and the first surface of the gasket have at least essentially the same axial coordinate. Deviations in the axial coordinate with ±*δ*% of the axial dimension of the gasket can be accepted, wherein *δ* ∈ *D* and *D =* {25, 20, 15, 10, 5, 2.5, 1, 0}.

In a preferred example, the peripheral surface of the connector portion and the connector portion facing surface of the gasket may be plain bearing surfaces contacting each other to form a linear plain bearing enabling an axial movement of the gasket relative to the connector portion. This measure simplifies manufacturing of the cartridge as manufacturing tolerances can be increased as these are automatically compensated during installation of the cartridge due to the linear bearing being formed. For the same reason, it is as well preferred if the inner surface of the sleeve, i.e. the radial abutment and the peripheral surface of the gasket are plain bearing surfaces assembled to form a linear bearing enabling an axial movement of the sleeve relative to the gasket. In other words, the two plain bearing surfaces may be positioned onto each other, to thereby enable a sliding movement of the sleeve relative to the gasket.

In a preferred example, the axial dimension of the radial abutment *dₐ* may preferably be greater than or equal to the axial dimension of the gasket *d_{c}* in an axially compressed state, i.e. *dₐ* ≥ *d_{c}.* Assuming that the gasket is axially compressed up to 75% of the non-compressed dimension *d_{nc}* when being mounted in a fluid filter housing (i.e. assuming 0.75 · *d_{nc}* ≤ *d_{c} < d_{nc}*), then it is preferred that the axial dimension *dₐ* of the radial abutment is greater than or equal to these 75% of the non-compressed dimension *d_{nc}* of the gasket, i.e. preferably 0.75 *· d_{nc}* ≤ *dₐ.* Particularly preferred *β · d_{nc}* ≤ *dₐ*, wherein *β* ∈ B with B = {0.75, 1, 1.25, 1.5, 1.75, 2, 2.5, 3}. There is no theoretic upper limit of *dₐ* but if one has to be defined for legal reason one may consider *γₘₐₓ* · *d_{nc}* with *γ* ∈ Γ and Γ = {5, 10, 25, 30} as a reasonable upper limit, i.e. in a preferred example *dₐ* ≤ *γₘₐₓ* · *d_{nc}* wherein *γₘₐₓ* can take any value of Γ (i.e. *γₘₐₓ* ∈ Γ).

If the axial dimension of the radial abutment *dₐ* is greater than or equal to the axial dimension of the gasket *d_{nc},* then a correct installation of the end cap in the housing is simplified and the risk of leakages is further reduced. Further, the gasket is well protected during transportation and the risk of future leaks is further reduced.

In a preferred example, the end cap may comprise a notch, preferably a ring notch. The notch may have a bottom, a radial boundary and an antiradial boundary. The radial boundary limits the notch in the radial direction and the antiradial boundary limits the notch in the direction towards the axis. The bottom may be provided and in this sense be defined by the first or second axially facing surface of the gasket. In the radial direction, the notch may be delimited by at least a section of the radial abutment of the sleeve and/or at least a portion of the antiradially facing surface of the sleeve. In other words, the radial boundary of the notch may be provided by and in this sense be defined by the surface of the sleeve facing towards the axis, i.e. by a portion of the inner surface of the sleeve that extends in the second axial direction over the gasket's second axially facing surface. In the antiradial direction the notch may be delimited and thus be defined by at least a section of a peripheral surface of the connector portion, e.g. by at least a portion of the peripheral surface of the connector portion that extends in the first or second axial direction over the first or second axially facing surface of the gasket, respectively.

The optional notch may provide a guide for a housing cover and thereby may reduce the risk that the gasket is damaged during the process of closing the housing when installing the end cap in the housing. Further, the inner surface of the sleeve may be configured to be in contact with the peripheral surface of the housing cover which provides a (preferably very thin) axially extending ring gap between the housing cover and the inner surface of the sleeve. Such ring gap functions as a second sealing (in addition to the gasket), i.e. it is a sealing gap and even potential leakages of the gasket do not automatically cause fluid to leak out of the fluid filter housing, or even fluid passes the gasket (e.g. due to being damaged), the amount of spilled fluid is vastly reduced.

Preferably, at least one spacer may be attached to the connector portion and to the sleeve. In other words, the spacer may be located between the connector portion and the sleeve and may hence be configured to transfer an axial preload from the connector portion onto the sleeve. For example, the spacer may preferably be configured to transfer a force in at least essentially the first axial direction from the connector portion onto the sleeve. Once mounted, this enables to ensure by preloading the connector portion in the first direction that the sleeve remains in contact with the socket, i.e. an oscillating gap between the sleeve and the socket can be avoided. For example, the spacer may extend through a through hole in the gasket. To render it more vivid: the connector portion, the at least one (preferably two or three or more) spacer(s) and the sleeve may be a unitary piece. This unitary piece may have a ring gap being delimited by the inner surface of the sleeve and the peripheral surface of the connector portion. The at least one spacer, e.g. two, three or even more spacers, may extend through the gap and in this sense attach the sleeve to the connector portion. The gasket may extend in the ring gap between the peripheral surface of the connector portion and inner surface of the sleeve and the spacer(s) may extend through the gasket. The gasket may be added by injection molding to the unitary piece, but other methods are not excluded (slotted gaskets, gaskets having a first and a second gasket ring that can be inserted from different sides into the gap between the sleeve and the connector portion, ... )

Preferably, the sleeve may have a protrusion engaging with the sleeve. For example, a protrusion of the gasket may abut against the protrusion of the sleeve and may be configured to entrain the sleeve in the first direction when the gasket is moved in the first direction. Thus, when compressing the gasket, the gasket transfers a force in the first direction via the sleeve's protrusion onto the sleeve and hence (preferably elastically) preloads the sleeve in the first or in the second direction. In other words, the two protrusions are configured to transfer a force in the first direction or in the second direction onto the sleeve if the gasket is compressed and/or pushed in the first direction. This measure as well enables to ensure that the sleeve remains in contact with the socket or the housing cover, if a cartridge with the end cap is mounted into a fluid filter housing.

It is preferred if the sleeve has a drain hole. The drain hole may provide a fluid communication between a drain hole inlet in the inner surface of the sleeve and a drain hole outlet in the peripheral surface of the sleeve. In this sense, the drain hole may be a duct connecting the drain hole inlet and the drain hole outlet. The drain hole reduces uncontrolled fluid spillage if a filter cartridge with the end cap is replaced: Initially the housing cover or the socket may block the drain hole inlet. When replacing a filter cartridge with the end cap, the housing cover may be retracted a first portion in the second direction until the housing cover or the socket no longer blocks the drain hole inlet, i.e. the drain hole inlet is released. The housing cover may still be connected to the socket and may hold the filter cartridge in position, while the drain hole is released. In other words, the drain hole inlet may be configured as a valve seat and the drain hole may hence be configured as a valve opening. The valve may be complemented by a filter housing cover or a socket which may be configured as a valve member having an open and a closed position or orientation and/or position. For linguistic simplicity herein we reference only to the open and closed positions, but it the terms *open position* and *closed position,* may be replaced by *open orientation and*/*or position* and *closed orientation and*/*or position,* respectively. For example, in the closed position, the housing cover may block the valve opening. For example, if the housing cover extends to the bottom of the notch of the end cap. Retracting the housing cover may release the opening. The retracted position may be considered as the open position of the valve member. In another example, the socket may have a closed position and an open position. In an example, the socket may extend into the notch. In this example the position in which the socket touches the bottom of the notch the socket is in the closed position. Retracting the end cap relative to the socket in second direction may cause the socket to move relative to the end cap in the first direction until the drain hole inlet is released. In both examples, it is preferred if the housing cover is still at least loosely attached to the socket if the valve member (i.e. the housing cover or the socket, as the case may be) is in its open position. This position of the housing cover may be considered as an intermediate position, in which the housing is not fully closed, but the housing cover is e.g. in engagement with the housing socket.

In a preferred example, a valve member is a part of the end cap. In more detail, the valve member may be a part of or integrally formed with at least one of the sleeve, the gasket and the connector portion. The valve member may be configured to release the valve opening in the valve member's open position and to close the valve opening in the valve member's closed position. This provides the advantage that the valve member is replaced with the end cap and hence with the filter cartridge. Further, the functioning of the valve can be tested before the filter cartridge is installed in the filter housing. Functioning of the valve member can even be tested before a filter element is attached to the end cap.

If the valve member is part of the sleeve, the gasket or the connector portion, the housing cover and/or the socket may be configured as valve actuators, shifting or maintaining the valve member of the sleeve in the closed position if the housing cover is closed and enabling a movement of the valve member into its open position if the housing cover is retracted into an intermediate position. In the intermediate position the housing cover may still be attached to the socket, but a gap between the gasket and housing cover or the socket may already be opened.

In this stage of the removal process of the filter cartridge, the end cap may still be biased against the socket (e.g., by a spring as will be explained below) or against the housing cover, and the gasket may thus still be forced against the socket or the housing cover. As the drain hole inlet is released, at least a majority of the fluid in the filter housing may flow through the drain hole e.g. into a receptacle positioned below the drain hole outlet. In a preferred example the drain hole outlet comprises a discharge port configured for being connected to a suction tube or any other kind of conduit (e.g. to a hose). A conduit being connected to the drain hole outlet (e.g. via the optional discharge port) allows to avoid or at least reduce unintended splashing of the fluid being released. In particular when handling (still) hot fluids, the drain hole in the sleeve severely reduces the risk of injuries of humans changing the filter cartridge, as (e.g. hot) fluid pouring out of the drain hole can be handled in a very controlled manner. The advantage applies as well, if the fluid in the filter housing is acidic, corrosive, toxic or in any other way harmful to humans or other parts of machinery in the vicinity of the fluid filter system. Maintenance costs can thus be reduced as there is no longer the requirement to wait that a machine cooled down before opening the filter housing. Only to avoid misunderstandings, it is preferred if the drain hole inlet is positioned axially spaced in the second direction from the gasket. Hence once mounted, the drain hole inlet is at the side of the gasket that faces away from the socket or in the second example away from the housing cover. For example, the drain hole inlet may provide a fluid communication between the drain hole (outlet) and the optional notch between the inner surface of the sleeve and the peripheral surface of the connector portion and/or -if mounted- the peripheral surface of a filter element.

As already indicated, the end cap may be comprised by a filter cartridge. For example, a filter cartridge may comprise a filter element having a first end and second end. The second side of the connector portion of the end cap may be attached to the first end of the filter element. Such end cap may thus be referred to as first-end cap. Alternatively, the first side of the connector portion may be attached to the second side of the filter element and the end cap may be referred to as second end cap. The end cap according to the invention can be a first or a second end cap. An optional other end cap (of the same or another type) may be attached to the respective other side of the filter element. To say it differently, the fluid filter cartridge may comprise a filter element being attached with its first end to the second side of the connector portion and/or a second end cap being attached with a first side to the second end of the filter element. The filter element may define a first fluid channel having an axis, which may be considered to be aligned (i.e.to be identical) to the axis of the first end cap. In other words, the fluid channel may define the axis of the end cap(s). The first fluid channel may be in fluid communication via a through hole, e.g., in the connector portion of the first end cap with a connector for connecting the fluid filter cartridge to a housing socket.

The filter cartridge and the corresponding filter housing may be offered as a kit. The filter housing of such kit may comprise at least a housing socket and a housing cover.

By installing the cartridge in the housing, a fluid filter system may be obtained. It comes without saying that the sleeve is not inside the housing but may surround at least a portion of the housing cover and/or the socket. For example, the filter element and the socket portion of the cartridge may be located in a fluid filter housing with a housing cover and a socket, wherein the gasket may be axially compressed in between of the socket and the housing. The sleeve may preferably be preloaded relative to the housing cover in the first direction by a spring or any other elastic member or in case the end cap is a second end cap preloaded relative to the socket in the second direction by a spring or any other elastic member. The elastic member may, e.g., be located in between of a first axial abutment of the housing cover or the socket and a second axial abutment of the filter cartridge. Herein the term *"spring"* is used as a vivid pars pro toto of *"elastic member".* The two terms are thus interchangeable herein.

For example, the second axial abutment may be located inside the first fluid channel and the spring (= the elastic member) may extend into the first fluid channel.

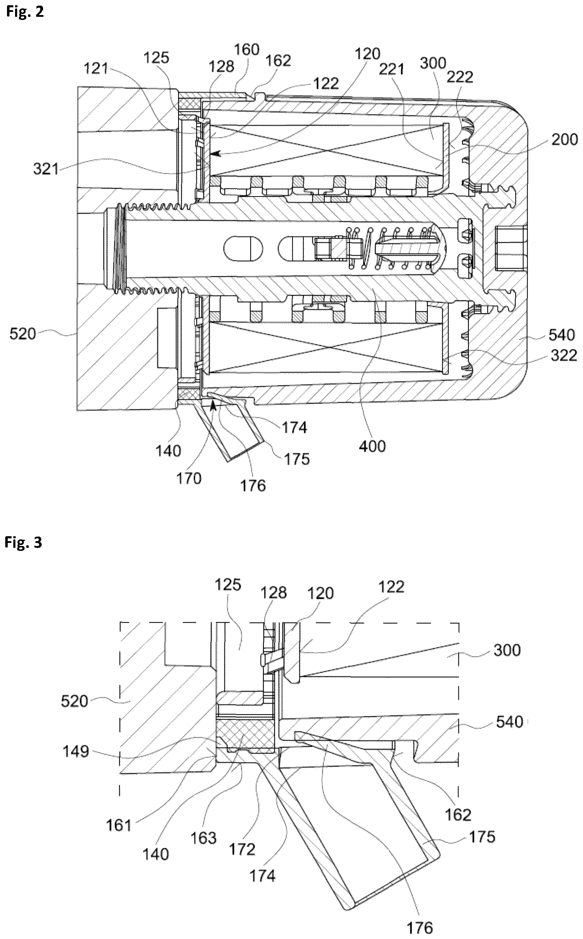

Herein, a ring can be a circular ring, but it does not need to. It can also be polygonal, oval, combinations of corresponding ring sections, etc.. Generally, any surface of a closed loop-structure may be considered as a ring. In a less vivid but potentially more precise language: Herein, a surface is considered to be a "ring" if it is homeomorph to a (ring) torus surface wherein as usual in the field of mechanical engineering a (ring) torus is obtained by a revolution of a circle around an axis which is in the plane of the circle but does not intersect it (see Bronshtein, Semedyayev, Musiol Muehlig: Handbook of Mathematics, 5th edition, Springer Berlin Heidelberg New York, ISBN 978-3-540-72121-5: Section 3.3.4, item 16, Fig. 3.79) and two surfaces M, N are homeomorph if there exists a homeomorphism *h: M* → *N,* i.e. h is bijective, *h* and its inverse *h*⁻¹ are continuous, (ibid, section 17.1.2.6).

Generally, a filter cartridge as described herein, and a filter housing as described herein may be provided as a kit. In a preferred example, the filter cartridge as described herein is installed, accommodated and/or received in and/or by, respectively, a fluid filter housing as described herein thereby forming a fluid filter system. Further, herein the term "fluid" can be replaced by "oil" or another fluid like e.g. "air", "fuel", "water" or the any other type of fluid, be it gaseous or liquid. Further, herein "fluid" is considered as the superordinate of "gas" and "liquid"

Herein the wording *"at least essentially"* indicates that a condition is preferably met, but that deviations within a reasonable error margin can be accepted. In case the condition describes an angular relation like such as parallel, orthogonal, or the like, this angular relation is preferably met but deviations within an error margin (an angle) ±*α* be accepted, wherein *α* ∈ A and A = {45°, 30°, 25°, 20°, 15°, 10°, 5°, 2.5°, 1°, 0°}. In other words, *a* can take any value of the set A. In case other parameters are disclosed to be met *"at least essentially"* this may be understood that these are met within an error margin of ±*δ*%, wherein *δ* ∈ *D* and *D =* {25, 20, 15, 10, 5, 2.5, 1, 0}, i.e. *δ* can take any value of the set D.

As usual in the art, the radial direction is perpendicular to the corresponding axial direction and points away from axis. The antiradial direction is simply the opposite direction of the radial direction. Referencing the radial or the antiradial direction implies cylinder coordinates.

### Description of Drawings

In the following the invention will be described by way of example, without limitation of the general inventive concept, on examples of embodiment with reference to the drawings.
Figure 1 presents a sectional view of a filter cartridge with an end cap.
Figure 2 presents a sectional view of the filter cartridge during installation in a fluid filter housing.
Figure 3 presents a detail of Figure 2.
Figure 4 presents a sectional view of the filter cartridge after installation in a fluid filter housing.
Figure 5 presents a detail of Figure 4.
Figure 6 presents a sectional view of the filter cartridge in a service position.
Figure 7 presents a detail of Figure 6.
Figure 8 presents a detail of another filter cartridge in a fluid filter housing.

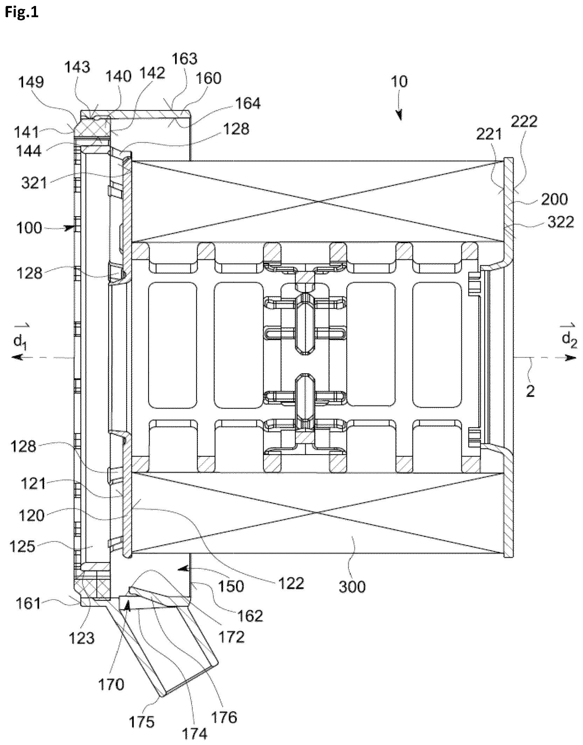

FIG. 1 presents an example fluid filter cartridge 10 (herein as well briefly filter cartridge 10). As shown, the filter cartridge 10 may have two end caps 100, 200, e.g. a first end cap 100 at the front end of the filter element and a second end cap 200 at the rear end of the filter cartridge 10. The first end cap 100 may comprise a connector portion 120 having a first side 121 and a second side 122.

Only to simplify referencing, vectors *̅d̅*̅₁ and *̅d̅*̅₂ are introduced. These face parallel to an axis 2 and *̅d̅*̅₁ points in the first direction *̅d̅*̅₁ and *̅d̅*̅₂ in the second direction *̅d̅*̅₂. These two directions *̅d̅*̅₁ and *̅d̅*̅₂ are preferably opposed to each other. In other words, the first side 121 may face at least essentially in the first direction *̅d̅*̅₁ and the second side 122 may face at least essentially in the second direction *̅d̅*̅₂.

A filter element 300 may be located between the two end caps 100, 200. For example, the second side 122 of the connector portion 120 may be attached ("connected") to a first end 321 of the filter element 300 and/or a first side 221 of the second end cap 200 may be attached to a second side 322 of the filter element 300. The first end cap 100, the filter element 300 and the second end cap 200 may preferably have a joint longitudinal axis 2.

The connector portion 120 may further be configured to be connected to a socket 520 of a fluid filter housing 500 (c.f. FIG.2).

The connector portion 120 may comprise a body (as well reference numeral 120). The body 120 may be cylindric and may hence be a cylindric body, i.e., the body may be a cylinder or at least resemble a (preferably right) cylinder. In the depicted example, axis 2 is preferably at least essentially parallel to the generating lines of the cylinder and extends preferably through its center. The body and hence the connector portion 120 may have a through hole, being configured to receive a fluid port of the housing socket 520 or a conduit 400 . The body may thus be a hollow cylinder. In the depicted example, the body is or at least resembles a flat right cylinder, however this is not required. The connector portion 120 may further have a peripheral surface 123. As shown, the peripheral surface 123 of the connector portion 120 may be defined by a ring 125 of the connector portion 120. The ring 125 may be attached by at least one spacer 128 to the body of the connector portion 120. In the depicted example, more than one spacer 128 is shown, but the actual number of spacers 128 is only an example. Through holes between the spacers 128 may provide fluid passages enabling a fluid to flow from a fluid outlet of the socket 520 to the peripheral surface of the filter element 300.

In other words, the connector portion 120 may have an optional ring 125 providing at least a portion of the connector portion's peripheral surface 123.

A gasket 140 may be located on the connector portion's peripheral surface 123 and/or surround the peripheral surface. In a preferred example, the gasket 140 may be slidingly attached to the connector portion's peripheral surface 123. The gasket 140 may thus be a ring and/or may have a first surface 141 facing at least essentially in the first direction *̅d̅*̅₁, second surface 142 facing at least essentially in the second direction *̅d̅*̅₂, an at least essentially sleeve facing surface 143 and an at least essentially connector portion facing surface 144.

As already apparent, a sleeve 160 may be located on the gasket's sleeve facing surface 143. The sleeve 160 may have a first boundary 161 facing at least essentially in the first direction *̅d̅*̅₁ and/or a second boundary 162 facing at least essentially in the first direction *̅d̅*̅₂, a peripheral surface 163 and/or an inner surface 164. The inner surface 164 may provide a radial abutment for the gasket 140.

Between the peripheral surface 123 of the connector portion 120 and the inner surface 164 of the sleeve 160 may be a notch 150 having a bottom being defined by the second surface 142 of the gasket 140. The notch 150 may be configured to receive a housing socket 520 facing end portion of a housing cover 540 (see FIG. 2).

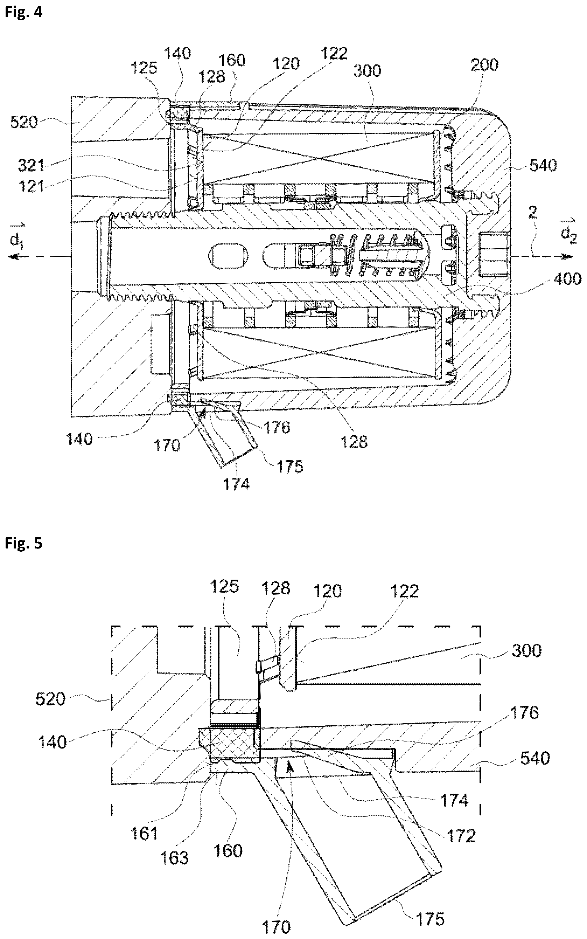

As can be seen in FIG. 2 and FIG. 3, the gasket 140 may preferably be configured to be clamped between the housing socket 520 and the housing cover 540 of a fluid filter housing, wherein the housing socket 520 and the housing cover 540 are configured to enclose a volume configured to accommodate the filter cartridge 10 (the clamped state is shown in FIG. 4 and FIG. 5, whereas FIG. 2 and FIG. 3 show a preassembled state).

The sleeve 160 may surround the gasket 140 and may hence radially support the gasket 140 and thereby prevent the gasket 140 from being so to speak extruded and/or squeezed by the fluid pressure and the force compressing the gasket 140 between the socket and the housing cover 540.

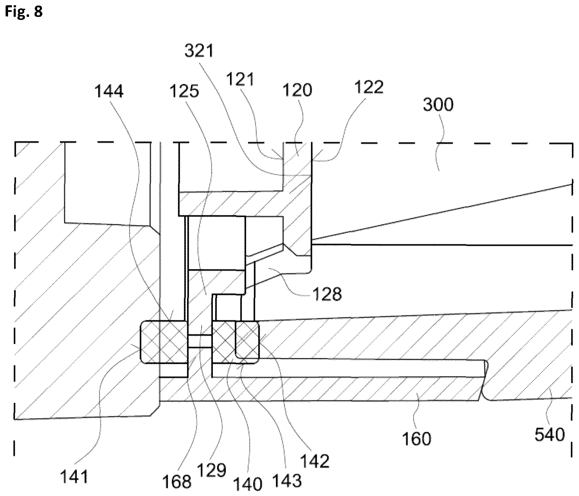

The sleeve 160 may have a protrusion pointing towards the axis 2 and hence towards the gasket's peripheral surface 143. The sleeve's protrusion 168 may preferably be configured to engage behind or in a recess of the gasket 140 (see FIG. 8), i.e. when mounted, a portion of the gasket's first surface may be in contact with a portion of the protrusion to thereby ensure that the gasket is not squeezed in a gap between the sleeve 160 and the socket 520. In the example of FIG. 1 to FIG. 7, this is obtained by a chamfer 149 of the gasket 140. But both variants can be combined. Further, the sleeve's protrusions 168 simplifies mounting of the filter cartridge 10, as advancing the filter housing cover 540 pushes the gasket 140 towards the socket 520. The gasket 140 preferably abuts the sleeve's protrusion 168 and thereby entrains the sleeve 160 until the sleeve 160 abuts the socket 520 first (i.e. prior to the gasket). Next, the gasket 140 can be pushed until its first surface 141 abuts the socket and can be compressed, e.g. until the sleeve 160 limits a further movement of the housing cover 540 towards the socket as indicated in FIG. 4 and 5. The sleeve 160 may thus prevent the gasket 140 from being destroyed during the mounting process.

The same result is obtained by the depicted alternative: The gasket 140 may have a chamfer 149 (see FIG. 1 and FIG. 3) connecting the gasket's first surface 141 and the gasket's sleeve facing surface 143.

If due to a pulsation of the fluid pressure the housing cover 540 is slightly shifted in the second direction, the gasket 140 may still be biased by the housing cover towards the socket and "(e.g. due to the engagement with the sleeve's protrusion 168,) the sleeve 160 remains in place, i.e. no gap opens between the socket 520 and sleeve 160. Thus, the gasket 140 cannot slide in the gap between the sleeve 160 and the gasket 140, which might cause fluids leaks.

As shown in FIG. 1 to FIG. 7, the end cap may have a drain hole 170 with a drain hole inlet 172 and a drain hole outlet 174 (see FIG. 1, 3, 5 and 7). In more detail, a drain hole 170 in the inner surface 164 of the sleeve 160 may connect the drain hole inlet 172 with the drain hole outlet 174. A drain port 175 may extend further outwards from the peripheral surface 163 of the sleeve 160. In this sense, the drain hole outlet 174 may extend into the drain port 175.

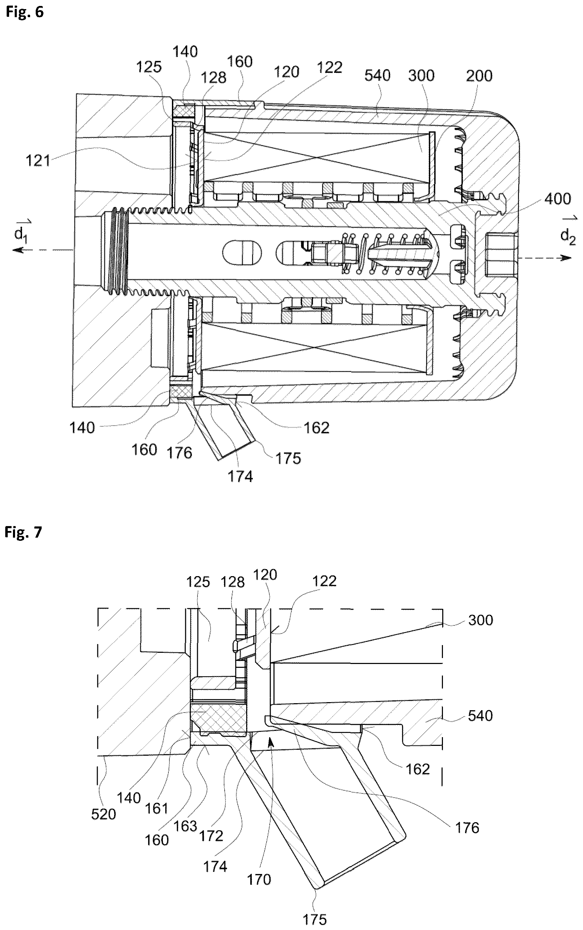

As can be seen in FIG. 4 and FIG. 5, in the fully mounted state the drain hole inlet 172 is preferably not in fluid communication with the inner portion of the fluid filter housing, because the fluid path may be blocked by the gasket 140. Further, the housing cover 540 may cover the drain hole inlet 172 and hence can be considered as a drain valve member of a drain valve, wherein the drain hole 170 is this a valve opening and the drain hole inlet 172 the valve seat. In a preferred example, an optional valve member 176 may be attached to the sleeve 160 and may be preloaded to extend into the notch 150 (see FIG. 1). For example, the valve member 176 may be attached to the sleeve 160 or may be integrally formed with the sleeve 160.The valve member 176 may be preloaded towards its open position as shown in FIG. 6 and 7 and may be configured to be moved into its closed position by a piece moving into the notch 150, for example by a filter housing cover 540. In this sense, the housing 540 cover can be considered as a valve actuation member, as moving the housing cover 540 into the first direction *̅d̅*̅₁ until it reaches its closed position as shown in FIGs. 3 and 4 may shift the valve member into the valve member's closed position

However, if the housing cover is slightly retracted as shown in FIG. 6 and FIG. 7 into an intermediate position, a gap opens between the gasket's second side 122 and the housing cover 540. Further retraction of the housing cover 540 may release the drain hole inlet 172 while the partially retracted housing cover 540 may still be attached to the housing socket 520. The valve member 176 may now extend into the gap and thus be in its open position. In this open position of the valve member 176, fluid may flow via the optional drain hole 170 and the optional drain port 179 out of the fluid filter housing. This allows draining the fluid filter housing via the drain port 175 in a controlled manner via the drain hole 170. Fluid spillage during filter inspection or replacement can be avoided or at least vastly reduced, e.g. by attaching conduit to the drain hole outlet, e.g. to the optional drain port 175.

In FIG. 1 to FIG. 7, the gasket 140 appears to overlap with the sleeve 160 or other parts (e.g. with the housing socket 520 and the housing cover 540 in FIG. 4 and FIG. 5). This overlapping can of course not take place but instead symbolizes the gasket's uncompressed size. The same holds mutatis mutandis for the valve member 176, being shown only in the open position, even FIG. 4 and 5, in which the housing cover 540 is shown to overlap with the valve member 176, but in reality the housing cover 540 pushes with its peripheral surface the valve member against the valve seat which may be provided by the drain hole 170, e.g. by the drain hole inlet 172.

FIG. 8 shows a detail of another example of an end cap of a filter cartridge being mounted in a filter housing. The description of the example shown in FIG. 1 to FIG. 7 can be read on the example of FIG. 8 as well. The difference is only the attachment of the gasket 140 to the connector portion 120 and the sleeve 160: At least one protrusion 129 of the connector portion 120 may extend into corresponding recesses in the connector portion facing surface 144 of the gasket 140 and similarly, at least one protrusion 168 may extend from the inner surface into the gasket's sleeve facing surface 143. This can be manufactured by insert molding and simplifies handling of the end cap, as it can be prevented that the end cap separates into its pieces during transport or installation in a filter housing. In FIG. 8 the gasket 140 appears to overlap with the housing socket 520 and the housing cover 540, being of course wrong, but it visualizes the cross section of the uncompressed gasket 140.

### Deletions are no prejudice

In the course of the examination or other proceedings claims, text passages, features and combinations of features may be deleted, be it simple by omission, explicit cancellation, striking, or in any other way. None of these deletions is a waiver to reintroduce the claims, text passages, features and combinations of features in the application or to future divisional applications. Deleted content of the application as initially filed is not abandoned. In other words, any deletion is without prejudice to the filing of one or more divisional application or usage of the deleted subject matter for any other purpose during prosecution of the present or any future divisional application. This paragraph may be deleted when preparing the text in which the examining division intends to grant a patent, but as well such deletion is without any prejudice to the filing of one or more divisional application or usage of the deleted subject matter for any other purpose during prosecution of the present or any future divisional application.

### List of reference numerals

- 2: axis
- 10: fluid filter cartridge
- 100: end cap
- 120: connector portion
- 121: first side
- 122: second side
- 123: peripheral surface
- 125: ring
- 128: spacer
- 129: protrusion
- 140: gasket
- 141: first surface
- 142: second surface
- 143: sleeve facing surface
- 144: connector portion facing surface
- 149: chamfer
- 150: notch
- 160: sleeve
- 161: first boundary
- 162: second boundary
- 163: peripheral surface
- 164: inner surface / radial abutment
- 168: protrusion
- 170: drain hole
- 172: drain hole inlet
- 174: drain hole outlet
- 175: drain port
- 176: valve member
- 200: end cap
- 300: filter element
- 400: conduit
- 500: fluid filter housing
- 520: housing socket
- 540: housing cover

## Claims

1. An end cap (100) for a fluid filter cartridge (10), wherein:
- the end cap (100) comprises a connector portion (120) and a gasket (140),
- the gasket (140) and/or the connector portion (120) define an axis (2),
- the connector portion (120) has a first side (121) facing within an error margin of ±45° into a first axial direction *̅d̅*̅₁ and a second side (122) facing within an error margin of ±45° into a second axial direction (*̅d̅*̅₂) and a peripheral surface,
- the connector portion (120) is configured for being connected with the first side (121) to a housing socket (520) or with a second side (122) to a filter housing cover (540),
- the gasket (140) surrounds the connector portion (120) and has a first surface (141) facing within an error margin of ±45° in the first axial direction (*̅d̅*̅₁) and a second surface (142) facing within an error margin of ±45° in the second axial direction (*̅d̅*̅₂),
- the gasket (140) has a peripheral surface (143) and a connector portion facing surface (144), and
- the gasket (140) in a non-compressed state has an axial dimension *d_{nc},*
**characterized in that** a sleeve (160) surrounds the gasket (140) and provides a radial abutment (164) for the gasket (140), wherein the sleeve (160) has a first boundary (161) and a second boundary (162), and wherein the first boundary (161) faces within an error margin of ±45° into the first axial direction (*̅d̅*̅₁) and the second boundary (162) faces within an error margin of ±45° into the second axial direction (*̅d̅*̅₂) and wherein the sleeve (160) has a peripheral surface (163) and an inner surface (164).

2. An end cap (100) of to claim 1,
**characterized in that**
the connector portion facing surface (144) of the gasket (140) contacts a peripheral surface (123) of the connector portion (120).

3. An end cap (100) of claim 1 or 2, **characterized in that** the first boundary (161) of the sleeve (160) is at least essentially flush with the first surface (141) of the gasket or that the second boundary (162) of the sleeve (160) is at least essentially flush with the second surface (142) of the gasket (140).

4. An end cap (100) of one of claims 1 to 3, **characterized in that** the peripheral surface (123) of the connector portion (120) and the connector-portion facing surface (144) of the gasket (140) are plain bearing surfaces joined to form a linear bearing enabling an axial movement of the gasket (140) relative to the connector portion (120) and/or the inner surface (164) of the sleeve (160) and the sleeve facing surface (143) of the gasket (140) are plain bearing surfaces joined to form a linear bearing enabling an axial movement of the sleeve (160) relative to the gasket (140).

5. An end cap (100) of one of claims 1 to 4, **characterized in that**:
- the first boundary (161) and the second boundary (162) define the axial dimension *dₛ* of the sleeve (160), and
- the axial dimension *dₛ* of the sleeve (160) is greater than or equal to $\frac{3}{4}$ of the axial dimension *d_{nc}* of the non-compressed gasket, i.e. ${d}_{s} \geq \frac{3}{4}$· *d_{nc}*·

6. An end cap (100) of one of claims 1 to 5, **characterized in that**:
- the end cap (100) comprises a notch (150) with a bottom, a radial boundary and an antiradial boundary,
- the bottom is defined by the first surface (141) or the second surface (142) ,
- optionally, in the radial direction, the notch (150) is delimited by a section of the radial abutment of the sleeve (160) and/or an antiradially facing surface of the sleeve (160), and
- optionally, in the antiradial direction, the notch (150) is delimited at least by a section of a peripheral surface of the connector portion (120).

7. An end cap (100) of one of claims 1 to 6, **characterized in that** at least one spacer (128) is attached to the connector portion (120) and to the sleeve (160).

8. An end cap (100) of one of claims 1 to 7, **characterized in that** the gasket (140) engages with a protrusion (168) of the sleeve (160) and **in that** the gasket and the protrusions (168) of the sleeve (160) are configured to transfer a force in the first axial direction (*̅d̅*̅₁) or in the second axial direction (*̅d̅*̅₂) onto the sleeve (160) if the gasket (140) is compressed and/or pushed in the first axial direction (*̅d̅*̅₁).

9. An end cap (100) of one of claims 1 to 8, **characterized in that** the gasket (140) attaches the sleeve (160) to the connector portion (120).

10. An end cap (100) of one of claims 1 to 9, **characterized in that** the sleeve (160) has a drain hole (170) connecting a drain hole inlet (172) in the inner surface (164) of the sleeve (160) with a drain hole outlet (174) in the peripheral surface (163).

11. An end cap (100) of claim 10, **characterized in that** the drain hole outlet (174) extends into a discharge port (175).

12. An end cap (100) of claim 9 or 10 and claim 6, **characterized in that** the drain hole inlet (172) is located in surface portion of the sleeve (160) that radially delimits the notch (150) and/or extends in the first or second axial direction (*̅d̅*̅₁, *̅d̅*̅₂) over the gasket (140) in its uncompressed state.

13. A fluid filter cartridge (10), **characterized in that** it comprises an end cap (100) of one of claims 1 to 11.

14. The fluid filter cartridge (10) of claim 12, **characterized in that**, the fluid filter cartridge (10) comprises a filter element (300) being attached with a first end to the second side (122) of the connector portion (120) and a rear end cap (200) being attached with a first side to a second end of the filter element (300), wherein preferably the filter element (300) defines a first fluid channel being in fluid communication via a through hole in the connector portion (120) with a protrusion (129) for connecting the fluid filter cartridge (10) to a housing socket (20).

15. A kit **characterized in that** it comprises:
- a fluid filter cartridge (10) of one of claims 12 or 13 and a housing socket (520) and/or a housing cover (540); and/or
- the end cap (100) of one of claims 1 to 11 and a filter element configured to be or being attached to the second side (122) of the end cap (100).

16. A fluid filter system, **characterized in that** the fluid filter cartridge (10) of one of claims 12 or 13 is installed in a fluid filter housing with a housing cover (540) and a housing socket (520), wherein the gasket (140) is axially compressed in between of the housing socket (520) and the housing cover (540) and **in that** the sleeve (160) is preloaded relative to the housing cover (540) in the first direction (*̅d̅*̅₁) by a spring being located in between of a first axial abutment of the housing cover (540) and a second axial abutment of the filter cartridge (10).

17. A fluid filter system of claim 16, **characterized in that** the second axial abutment is located inside the first fluid channel and **in that** the spring extends into the first fluid channel.
